# EUROPEAN PATENT APPLICATION

(11) **EP 4 737 330 A1**
(43) Date of publication of application: **06.05.2026**
(21) Application number: 24831510.3
(22) Date of filing: 23.05.2024
(51) Int. Cl.: B64U 70/80, B60P 3/11, B62D 63/02, B64U 70/93, B64U 80/30

(54) **WORK VEHICLE AND WORK VEHICLE SYSTEM**

(30) Priority: 28.06.2023 JP 2023106175; 28.06.2023 JP 2023106176
(71) Applicant: Kubota Corporation, Osaka 556-8601 (JP)
(72) Inventor: HAZAWA, Yuhei, Sakai-shi, Osaka 590-0908 (JP); HIRAOKA, Minoru, Sakai-shi, Osaka 590-0908 (JP); YAMANAKA, Yukifumi, Sakai-shi, Osaka 590-0908 (JP); ISHIKAWA, Junichi, Sakai-shi, Osaka 590-0908 (JP); YOSHII, Kaichiro, Sakai-shi, Osaka 590-0908 (JP); IDA, Yusuke, Sakai-shi, Osaka 590-0908 (JP); JINNOUCHI, Katsutoshi, Sakai-shi, Osaka 590-0908 (JP); NIKI, Ryota, Sakai-shi, Osaka 590-0908 (JP); YAMAGISHI, Ryota, Sakai-shi, Osaka 590-0908 (JP)
(74) Representative: Cabinet Beau de Loménie
(86) International application number: PCT/JP2024/019042
(87) International publication number: WO 2025/004639

(57) **Abstract**

A work vehicle includes: a body including a takeoff and landing section (5) on which an unmanned aerial vehicle (DR) is capable of taking off and landing, a travel device (2) supporting the takeoff and landing section (5) and capable of traveling on the ground, and a tilt acquisition section configured to acquire a tilt of the takeoff and landing section (5) from a horizontal plane; and an attitude adjustment mechanism (3) configured to adjust an attitude of the body (1) in accordance with the tilt acquired by the tilt acquisition section in such a manner that, in a case where the tilt is equal to or more than a threshold, the attitude adjustment mechanism (3) adjusts the attitude of the body to reduce the tilt below the threshold.

## Description

### Technical Field

The present invention relates to a work vehicle and a work vehicle system.

### Background Art

[1] Patent Literature 1 discloses an unmanned mobile body including a heliport used for taking-off and landing of a drone. The heliport has a two-stage structure including a base for a platform and a top plate for the platform which top plate is provided on the base. A drive mechanism for pivoting a rod member is provided on the base. The rod member is pivoted by the drive mechanism so that the rod member can catch the drone.

[2] Patent Literature 2 discloses a self-propelled hose deployment machine for deploying a hose for transferring stagnant water into the stagnant water. The hose deployment machine includes a plurality of cameras. Among the plurality of cameras, a second camera is provided at a distal end of a rotational support member, and the attitude of the second camera is adjusted by rotating the rotational support member.

### Citation List

### Patent Literature

Patent Literature 1: WO2016/143806 A1
Patent Literature 2: Japanese Unexamined Patent Application Publication No. 2019-188930 (JP 2019-188930 A)

### Summary of Invention

### Technical Problem

### [1] A problem of [1] in Background Art is as follows.

The heliport described in Patent Literature 1 includes the rod member that can catch a drone. Hereby, the drone can be fixed to the heliport. However, the heliport is not provided with a mechanism for controlling the tilt of the top plate.

In a case where a vehicle travels on bumpy ground or sloping ground, the body of the vehicle tilts, so that a takeoff and landing section on which an unmanned aerial vehicle can land tends to tilt. Since the takeoff and landing section tilts, it is hard for the unmanned aerial vehicle to land on the takeoff and landing section.

The present invention provides a work vehicle that controls the tilt of a takeoff and landing section on which an unmanned aerial vehicle can land.

### [2] A problem of [2] in Background Art is as follows.

The hose deployment machine disclosed in Patent Literature 2 includes a mechanism for adjusting the attitude of the second camera but does not include a mechanism for adjusting the attitude of the body of a vehicle.

In a case where the vehicle travels on bumpy travel surfaces, the attitude of the body may be adjusted to clear bumps. In this case, it is necessary to individually adjust the attitude of the camera and the attitude of the body.

The present invention provides a work vehicle which can simplify the operation to adjust the attitude of a body of the work vehicle and the attitude of a work device and which achieves a reduction in the number of components.

### Solution to Problem

### [1] The means for solving the problem of [1] is as follows.

A work vehicle of the present invention includes: a body including a takeoff and landing section on which an unmanned aerial vehicle is capable of taking off and landing, a travel device supporting the takeoff and landing section and capable of traveling on ground, and a tilt acquisition section configured to acquire a tilt angle of the takeoff and landing section from a horizontal plane; and an attitude adjustment mechanism configured to adjust an attitude of the body in accordance with the tilt angle acquired by the tilt acquisition section, in such a manner that, in a case where the tilt angle is equal to or more than a threshold, the attitude adjustment mechanism adjusts the attitude of the body to reduce the tilt angle below the threshold.

With this configuration, even in a case where the body tilts when the work vehicle travels on bumpy ground or sloping ground, the unmanned aerial vehicle can easily land on the takeoff and landing section due to the attitude adjustment mechanism, as compared with the conventional devices.

In the present invention, the attitude adjustment mechanism may include extension-retraction mechanisms supported by respective traveling wheels in such a manner as to be extendable and retractable, and in a case where the tilt angle is equal to or more than the threshold at a time when the unmanned aerial vehicle lands on the takeoff and landing section, the attitude adjustment mechanism may extend and retract the extension-retraction mechanisms to adjust the attitude of the body to reduce the tilt angle below the threshold.

In a case where the tilt angle of the body is controlled to become small when the work vehicle travels on sloping ground, when a portion of the body which portion is positioned higher approaches an inclined surface, the body may come into contact with the ground. With this configuration, in comparison with a configuration to pivot the body around an axis passing through the body and extending horizontally, the attitude of the body is flexibly adjustable, so that the body is less likely to come into contact with the ground.

In the present invention, the attitude adjustment mechanism may adjust the attitude of the body such that the tilt angle reaches zero degrees at a time when the unmanned aerial vehicle lands on the takeoff and landing section.

With this configuration, the takeoff and landing section is maintained to be horizontal by the attitude adjustment mechanism, so that the unmanned aerial vehicle can easily land on the takeoff and landing section.

In the present invention, the work vehicle may further include: a work-vehicle-side communication section communicable with an aerial-vehicle-side communication section of the unmanned aerial vehicle; and a determination section configured to determine whether or not landing of the unmanned aerial vehicle on the takeoff and landing section is permissible, in such a manner that, in a case where the tilt angle is equal to or more than the threshold, the determination section determines that the takeoff and landing section is in a landing-prohibited state, and in a case where the tilt angle is smaller than the threshold, the determination section determines that the takeoff and landing section is in a landing-permitted state. The work-vehicle-side communication section may transmit information on whether the takeoff and landing section is in the landing-permitted state or not, to the aerial-vehicle-side communication section.

With this configuration, when the unmanned aerial vehicle is about to land, information on whether or not the unmanned aerial vehicle can land on the takeoff and landing section is transmitted to the unmanned aerial vehicle, so that the unmanned aerial vehicle can land on the takeoff and landing section safely.

In the present invention, the body may further include a sensor configured to detect surroundings of the body. In a case where it is determined that an obstacle is present around the body, based on an output signal from the sensor, the work-vehicle-side communication section may transmit information indicating that the takeoff and landing section is in the landing-prohibited state, to the aerial-vehicle-side communication section.

Even in a case where the takeoff and landing section is maintained at a tilt angle at which the unmanned aerial vehicle can land, if there is an obstacle such as a tree or the like around the work vehicle, the unmanned aerial vehicle may come into contact with the obstacle at the time of landing. With this configuration, in a case where it is determined that an obstacle is present around the body at the time when the unmanned aerial vehicle lands, information indicating that the unmanned aerial vehicle cannot land on the takeoff and landing section is transmitted to the unmanned aerial vehicle, so that the unmanned aerial vehicle can avoid contact with the obstacle around the body.

In the present invention, the takeoff and landing section may include a marker indicating a position of the takeoff and landing section to the unmanned aerial vehicle.

With this configuration, since the unmanned aerial vehicle is notified of the position of the takeoff and landing section, the unmanned aerial vehicle can easily land on the takeoff and landing section.

In the present invention, the body may further include a battery configured to supply electric power to the body, and the takeoff and landing section may include a supply mechanism capable of supplying the electric power from the battery to the unmanned aerial vehicle.

The capacity of the battery provided for the unmanned aerial vehicle is limited, and it is necessary to charge the battery regularly. For example, in operations in mountainous areas distant from a charging station, charging opportunities for the unmanned aerial vehicle are limited. With this configuration, electric power of the battery of the work vehicle can be supplied to the unmanned aerial vehicle by the supply mechanism. Accordingly, even in environments where charging opportunities are limited, the unmanned aerial vehicle can be used for a long-term operation.

In the present invention, the travel device may be stopped during landing of the unmanned aerial vehicle on the takeoff and landing section.

With this configuration, the unmanned aerial vehicle can land on the takeoff and landing section safely.

A work vehicle system of the present invention is a work vehicle system including an unmanned aerial vehicle; and a work vehicle including a takeoff and landing section on which the unmanned aerial vehicle is capable of taking off and landing, a travel device supporting the takeoff and landing section and capable of traveling on ground, a tilt acquisition section configured to acquire a tilt angle of the takeoff and landing section from a horizontal plane, and an attitude adjustment mechanism configured to adjust an attitude of the work vehicle in accordance with the tilt angle acquired by the tilt acquisition section, in such a manner that, in a case where the tilt angle is equal to or more than a threshold, the attitude adjustment mechanism adjusts the attitude of the work vehicle to reduce the tilt angle below the threshold.

With this configuration, even in a case where the body tils when the work vehicle travels on bumpy ground or sloped ground, the unmanned aerial vehicle can easily land on the takeoff and landing section due to the attitude adjustment mechanism, as compared with the conventional devices.

### [2] A means for solving the problem of [2] is as follows.

A work vehicle of the present invention is a work vehicle capable of performing unmanned travel over a travel surface, and includes: a body; a travel device supporting the body and capable of traveling on the travel surface; a work device fixed to the body; and an attitude adjustment mechanism configured to adjust an attitude of the body, the work device being adjustable in attitude as the attitude adjustment mechanism adjusts the attitude of the body.

With this configuration, the attitude adjustment mechanism can adjust both the attitude of the body and the attitude of the work device. Accordingly, in comparison with a case where the attitude of the body and the attitude of the work device are adjusted separately, the operations to adjust the attitudes of the body and the work device can be simplified. Besides, the number of components can be reduced, thereby making it possible to achieve a cost reduction.

In the present invention, the attitude adjustment mechanism may include extension-retraction mechanisms supported by the traveling wheels, respectively, in such a manner as to be extendable and retractable, and the attitude adjustment mechanism may be capable of adjusting the attitude of the body between a traveling attitude enabling the work vehicle to travel on the travel surface and an operational attitude enabling the work device to perform an operation, by extending and retracing the extension-retraction mechanisms.

In a case where the tilt angle of the body is controlled to be small at the time of traveling on a sloping travel surface, when a portion of the body which portion is positioned higher moves in a direction approaching the sloping surface, the body may come into contact with the ground. With this configuration, in comparison with a configuration to pivot the body around an axis passing through the body and extending horizontally, the attitude of the body is flexibly adjustable, so that the body is less likely to come into contact with the ground.

In the present invention, the attitude adjustment mechanism may be capable of adjusting heights of the body and the work device by extending and retracting the extension-retraction mechanisms.

With this configuration, both the height of the body and the height of the work device can be adjusted by extending and retracting the extension-retraction mechanisms. Accordingly, in comparison with a case where the height of the body and the height of the work device are adjusted separately, the operations to adjust the heights of the body and the work device can be simplified. Besides, the number of components can be reduced, thereby making it possible to achieve a cost reduction.

In the present invention, the body may include a tilt acquisition section configured to acquire a tilt angle of the body from a horizontal plane. While the work vehicle is in the traveling attitude, the attitude adjustment mechanism may adjust the attitude of the body, based on a detection result from the tilt acquisition section, such that a top surface of the body is horizontal, and while the work vehicle is in the operational attitude, the attitude adjustment mechanism may adjust the attitude of the body, based on a detection result from the tilt acquisition section, such that the top surface of the body tilts from the horizontal plane.

With this configuration, while the work vehicle is in the traveling attitude, the work vehicle can travel with the body in a stable attitude, and while the work vehicle is in the operational attitude, the work device tilts, so that the attitude of the work device can be adjusted to an attitude in which the work device can easily perform an operation.

In the present invention, the work device may be a measurement device configured to measure the travel surface, and the measurement device may be capable of measuring the travel surface as the attitude adjustment mechanism adjusts the attitude of the body.

With this configuration, the attitude adjustment mechanism can adjust both the attitude of the body and the attitude of the measurement device. Accordingly, in comparison with a case where the attitude of the body and the attitude of the work device are adjusted separately, the operations to adjust the attitudes of the body and the work device can be simplified. Besides, the number of components can be reduced, thereby making it possible to achieve a cost reduction.

In the present invention, the work vehicle may further include a steering device capable of steering the travel device. The travel device may include right and left traveling wheels and is capable of traveling on an inner surface of a water pipe, as the travel surface, and in a case where the body tilts from a horizontal plane in a right-left direction of the body at an angle equal to or more than a threshold, the steering device may steer the travel device in a direction of a traveling wheel that is positioned lower out of the right and left traveling wheels.

In a case where the travel device travels on the inner surface of the cylindrical water pipe, the body tends to tilt in the right-left direction. With this configuration, due to steering of the travel device by the steering device, the travel device can easily travel on the inner surface of the water pipe.

In the present invention, the work device may be a bucket configured to scoop up a target object on the travel surface, and the bucket may be capable of scooping up the target object on the travel surface as the attitude adjustment mechanism adjusts the attitude of the body.

With this configuration, the attitude adjustment mechanism can adjust both the attitude of the body and the attitude of the bucket. Accordingly, in comparison with a case where the attitude of the body and the attitude of the bucket are adjusted separately, the operations to adjust the attitudes of the body and the bucket can be simplified. Besides, the number of components can be reduced, thereby making it possible to achieve a cost reduction.

In the present invention, the work device may be a crane configured to lift and hold a target object on the travel surface, and the crane may be capable of lifting and holding the target object as the attitude adjustment mechanism adjusts the attitude of the body.

With this configuration, the attitude adjustment mechanism can adjust both the attitude of the body and the attitude of the crane. Accordingly, in comparison with a case where the attitude of the body and the attitude of the crane are adjusted separately, the operations to adjust the attitudes of the body and the crane can be simplified. Besides, the number of components can be reduced, thereby making it possible to achieve a cost reduction.

In the present invention, the body may include a mounting table on which an article is placeable, and the article placed on the mounting table may be transported to outside the body as the attitude adjustment mechanism adjusts the attitude of the body.

With this configuration, the attitude adjustment mechanism can adjust the attitude of the body and transport the article on the mounting table. Accordingly, in comparison with a case where the adjustment of the attitude of the body and the transport of the article are performed separately, the operation to adjust the attitude of the body and the operation to transport the article can be simplified. Besides, the number of components can be reduced, thereby making it possible to achieve a cost reduction.

### Brief Description of Drawings

Fig. 1 is a left side view illustrating a work vehicle including a takeoff and landing section on which an unmanned aerial vehicle according to a first embodiment is landed;
Fig. 2 is a left side view illustrating the work vehicle including the takeoff and landing section with the unmanned aerial vehicle according to the first embodiment being hovering after takeoff;
Fig. 3 is a plan view illustrating the work vehicle according to the first embodiment;
Fig. 4 is a side view illustrating an extension-retraction mechanism according to the first embodiment;
Fig. 5 is a hydraulic circuit diagram illustrating a hydraulic pressure supply source according to the first embodiment;
Fig. 6 is a block diagram illustrating a work vehicle system according to the first embodiment;
Fig. 7 is a view illustrating the takeoff and landing section in a landing-permitted state, according to the first embodiment;
Fig. 8 is a view illustrating the takeoff and landing section in a landing-prohibited state, according to the first embodiment;
Fig. 9 is a flowchart illustrating adjustment of the attitude of a body of the work vehicle by an attitude adjustment mechanism according to the first embodiment;
Fig. 10 is a left side view illustrating a work vehicle in a traveling attitude according to a second embodiment;
Fig. 11 is a left side view illustrating the work vehicle in an operational attitude according to the second embodiment;
Fig. 12 is a plan view illustrating the work vehicle according to the second embodiment;
Fig. 13 is a block diagram illustrating a work vehicle system according to the second embodiment;
Fig. 14 is a view illustrating steering of a travel device by a steering device according to the second embodiment;
Fig. 15 is a flowchart illustrating steering of the travel device by the steering device according to the second embodiment;
Fig. 16 is a view illustrating another example of the work vehicle in the operational attitude, according to the second embodiment;
Fig. 17 is a view illustrating another example of the work vehicle in the traveling attitude according to the second embodiment;
Fig. 18 is a view illustrating another example of the work vehicle in the operational attitude according to the second embodiment;
Fig. 19 is a view illustrating another example of the work vehicle in the traveling attitude according to the second embodiment;
Fig. 20 is a view illustrating another example of the work vehicle in the operational attitude according to the second embodiment; and
Fig. 21 is a view illustrating another example of the work vehicle in the traveling attitude according to the second embodiment.

### Description of Embodiments

### [First Embodiment]

The following describes a work vehicle and a work vehicle system according to the present invention based on the drawings. Note that, in the following description, the direction of arrow FW in the drawings indicates a "front side," the direction of arrow BK indicates a "rear side," the direction of arrow UP indicates an "upper side," the direction of arrow DW indicates a "lower side," the direction of arrow RH indicates a "right side," and the direction of arrow LH indicates a "left side."

The work vehicle can travel on uneven ground. The work vehicle can be remotely operated by remote control operation or travels autonomously. The uneven ground indicates bumpy ground, sloping ground, or the like.

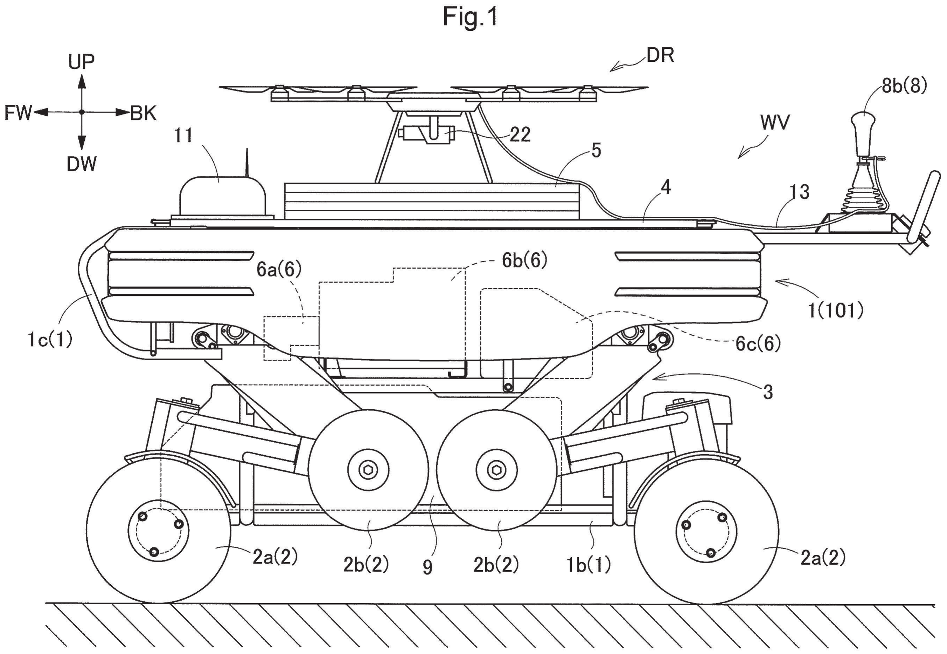

As illustrated in Figs. 1, 2, 3, a work vehicle WV includes a travel device 2 that can travel over the ground, a takeoff and landing section 5 on which an unmanned aerial vehicle DR can take off and land, and an attitude adjustment mechanism 3 configured to adjust the attitude of a body 101 of the work vehicle WV in accordance with the tilt angle of the takeoff and landing section 5. The body 101 of the work vehicle WV has a rectangular shape in a plan view.

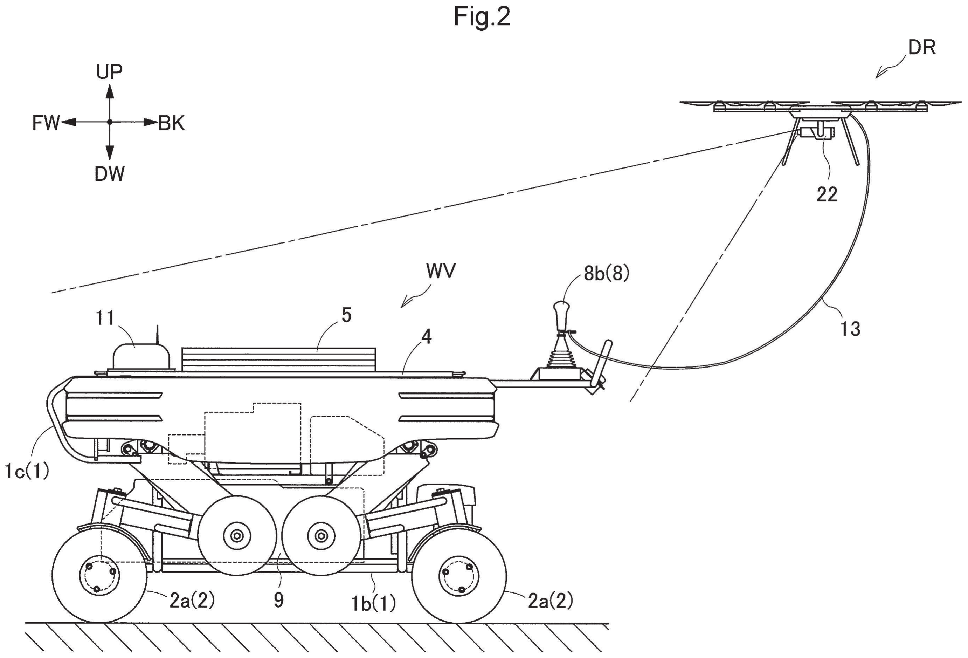

Fig. 1 illustrates a state where a drone as an example of the unmanned aerial vehicle DR is landed on the takeoff and landing section 5. Fig. 2 illustrates a state where the drone as the example of the unmanned aerial vehicle DR is hovering after takeoff from the takeoff and landing section 5. The unmanned aerial vehicle DR includes a storage unit (not illustrated), and a CPU configured to execute programs. The storage unit is constituted by an HDD, a ROM, a nonvolatile memory, and the like, for example. The unmanned aerial vehicle DR includes a plurality of propellers as rotor blades, provided in an upper portion thereof. The unmanned aerial vehicle DR also includes a plurality of grounding legs, provided in a lower portion thereof.

As illustrated in Figs. 1, 2, the unmanned aerial vehicle DR includes an imaging device 22. The imaging device 22 is a camera capable of capturing images of the work vehicle WV and the surroundings of the work vehicle WV. At the time when the work vehicle WV autonomously travels on uneven ground, bumps or obstacles may be present around the work vehicle WV. In the present embodiment, in a case where the unmanned aerial vehicle DR is hovering after takeoff from the takeoff and landing section 5, the imaging device 22 can capture images of the work vehicle WV and the surroundings of the work vehicle WV from a position is higher than the work vehicle WV. Hereby, it is possible to capture images of a large area, in comparison with a configuration to capture images of the work vehicle WV and the surroundings of the work vehicle WV by the imaging device 22 provided in the body 101 of the work vehicle WV. The images captured by the imaging device 22 are stored in the storage unit of the unmanned aerial vehicle DR. In the present embodiment, the images are static images. However, the present invention is not limited to this, and the images may be moving images or videos continuously showing static images.

The body 101 of the work vehicle WV includes a body frame 1, a flat-shaped mounting table 4 on which an article can be loaded, a hydraulic pressure supply source 6 configured to drive the travel device 2, a control device 7 configured to control the work vehicle WV by a microcomputer, a steering device 8 including an operation handle 8b capable of steering the travel device 2, a battery 9 configured to supply electric power to the body 101, a charger 10 connectable to an external power source and configured to charge the battery 9, and a GPS antenna unit 11.

The travel device 2 includes a plurality of traveling wheels 2a and auxiliary wheels 2b and supports the attitude adjustment mechanism 3 and the body 101 of the work vehicle WV. That is, the travel device 2 supports the takeoff and landing section 5 of the body 101. The attitude adjustment mechanism 3 is supported by the traveling wheels 2a.

In the present embodiment, the plurality of traveling wheels 2a is located on the left front side, the right front side, the right rear side, and the left rear side of the work vehicle WV, respectively. The plurality of traveling wheels 2a is four driving wheels. However, the present invention is not limited to this, and the plurality of traveling wheel 2a may be six or eight driving wheels, for example.

The body frame 1 includes an upper frame 1a supported by the attitude adjustment mechanism 3, a lower frame 1b extending downward from the upper frame 1a, an outer peripheral frame (not illustrated) covering a portion of the upper frame 1a which portion faces outward of the body, and a cover 1c configured to be openable and closable and covering the charger 10 from the front side of the body. The upper frame 1a includes right and left frames extending in a front-rear direction of the body, and a plurality of coupling frames coupling the right and left frames to each other. The charger 10 is fixed to a front end portion of the upper frame 1a.

The mounting table 4 is disposed on the top surface of the body frame 1. The mounting table 4 has a rectangular shape in a plan view. The mounting table 4 covers the whole upper frame 1a from its upper side. An article can be placed on the top surface of the mounting table 4. The article to be placed on the mounting table 4 can be, for example, agricultural machines, agriculture materials such as fertilizer and chemical agent, pallets on which crops, a crop basket, or the like are placed, and the like. The takeoff and landing section 5 and the GPS antenna unit 11 are disposed on the top surface of the mounting table 4.

### [Takeoff and Landing Section]

As illustrated in Figs. 1, 2, 3, the takeoff and landing section 5 has a box-shape and is rectangular in a plan view.

The unmanned aerial vehicle DR can take off from and land on the takeoff and landing section 5. The top surface of the takeoff and landing section 5 is flat. The top surface of the takeoff and landing section 5 is located above the top surface of the mounting table 4.

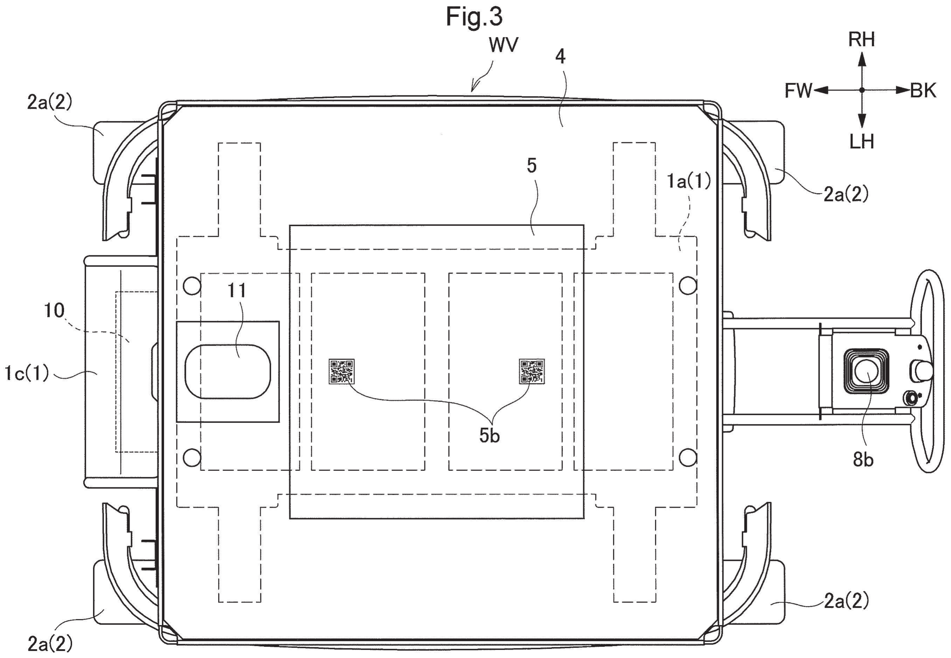

As illustrated in Fig. 3, the takeoff and landing section 5 is disposed to overlap with the upper frame 1a in a plan view. Hereby, the takeoff and landing section 5 is stably supported by the upper frame 1a. The takeoff and landing section 5 is located at the center of the body 101 in the right-left direction. The takeoff and landing section 5 is also located at the center of the body 101 in the front-rear direction. Hereby, the takeoff and landing section 5 is stably supported by the body 101.

The takeoff and landing section 5 includes a marker 5b indicating the position of the takeoff and landing section 5 to the unmanned aerial vehicle DR.

The marker 5b is captured by the imaging device 22 of the unmanned aerial vehicle DR, so that the unmanned aerial vehicle DR can read information that the takeoff and landing section 5 is a landing target. In the present embodiment, the marker 5b is a code (for example, QR Code (registered trademark)) readable by the imaging device 22. However, the present invention is not limited to this, and the marker 5b may be the letter of "H" indicating the takeoff and landing section 5.

As illustrated in Fig. 1, the hydraulic pressure supply source 6 includes a hydraulic pump 6a configured to supply hydraulic oil to the attitude adjustment mechanism 3 and the travel device 2, an electric motor 6b configured to drive the hydraulic pump 6a, and a hydraulic oil tank 6c. The hydraulic pump 6a, the electric motor 6b, and the hydraulic oil tank 6c are supported by the upper frame 1a. The battery 9 is supported by the lower frame 1b.

As illustrated in Fig. 1, the operation handle 8b is provided to extend vertically from the top surface of the body 101 of the work vehicle WV. In the present embodiment, the operation handle 8b is a joy stick. The operation handle 8b can change the advancing direction and the speed of advance of the travel device 2 in accordance with a direction to which the operation handle 8b is tilted or an angle by which the operation handle 8b is tilted.

The unmanned aerial vehicle DR is connected to the operation handle 8b by a connection member 13. The connection member 13 is a flexible cable. The work vehicle WV follows the unmanned aerial vehicle DR and travels in a direction where the unmanned aerial vehicle DR flies. For example, in response to the unmanned aerial vehicle DR flying forward from the work vehicle WV, the operation handle 8b is tilted forward, so that the work vehicle WV follows the unmanned aerial vehicle DR and travels forward. In the meantime, in response to the unmanned aerial vehicle DR flying rearward from the work vehicle WV, the operation handle 8b is tilted rearward, so that the work vehicle WV follows the unmanned aerial vehicle DR and travels rearward. Hereby, even if the work vehicle WV cannot receive radio waves while the work vehicle WV is traveling through mountainous areas, the work vehicle WV can travel following the unmanned aerial vehicle DR that more easily receives radio waves than the work vehicle WV. However, the present invention is not limited to this, and the unmanned aerial vehicle DR may not be connected to the operation handle 8b by the connection member 13.

The GPS antenna unit 11 receives positioning signals from an artificial satellite used for GNSS (global navigational satellite systems, e.g., GPS, QZSS, Galileo, GLONASS, BeiDou, and the like). The GPS antenna unit 11 is disposed adjacent to the takeoff and landing section 5. More specifically, the GPS antenna unit 11 is disposed in a front portion of the body 101 and is located forward of the takeoff and landing section 5. As illustrated in Fig. 3, the GPS antenna unit 11 is located at the center of the body 101 in the right-left direction.

### [Attitude Adjustment Mechanism]

The attitude adjustment mechanism 3 includes a plurality of extension-retraction mechanisms F extending downward from the body frame 1. More specifically, the plurality of extension-retraction mechanisms F is disposed on the left front side, the right front side, the right rear side, and the left rear side of the work vehicle WV, respectively. In other words, the attitude adjustment mechanism 3 includes four extension-retraction mechanisms F. The attitude of the body 101 of the work vehicle WV can be adjusted as the plurality of extension-retraction mechanisms F independently extends and retracts.

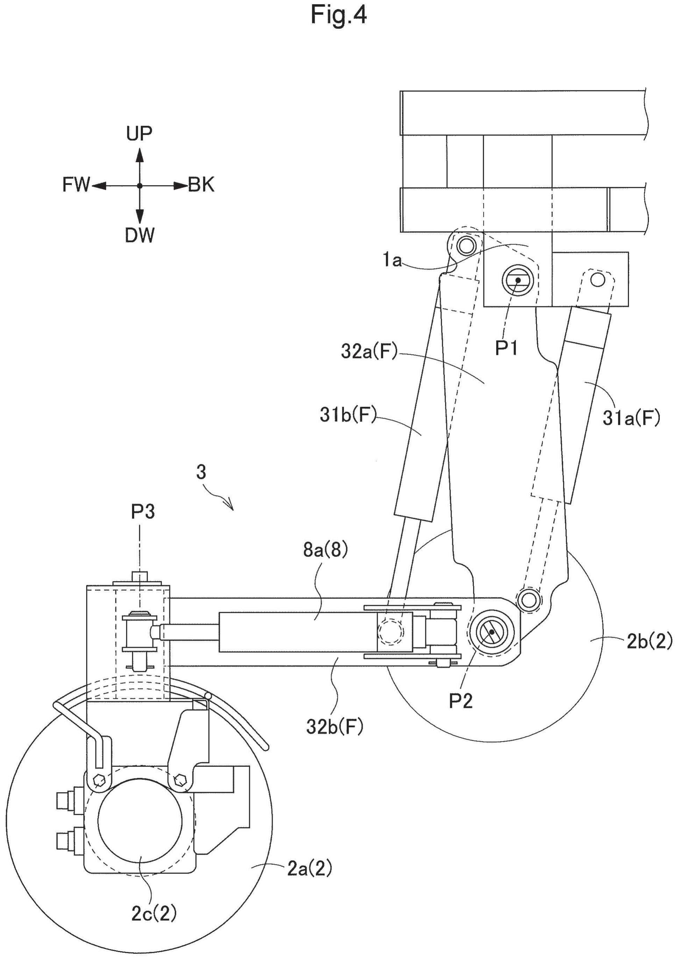

As illustrated in Fig. 4, the extension-retraction mechanism F includes a first link 32a having a bar shape and swingable around an axis P1 extending in the right-left direction of the body, a second link 32b having a bar shape and swingable around an axis P2 extending in the right-left direction of the body, a first hydraulic cylinder 31a that is extendable and retractable, and a second hydraulic cylinder 31b that is extendable and retractable.

One end portion of the first link 32a is swingably coupled to the upper frame 1a, and the other end portion of the first link 32a is swingably coupled to the second link 32b. One end portion of the second link 32b is swingably coupled to the first link 32a, and the other end portion of the second link 32b is supported by the traveling wheel 2a. The auxiliary wheel 2b that is rotatable is provided in a connecting portion between the first link 32a and the second link 32b.

One end portion of the first hydraulic cylinder 31a is coupled to the upper frame 1a, and the other end portion of the first hydraulic cylinder 31a is coupled to the first link 32a. The first link 32a swings around the axis P1 relative to the upper frame 1a in response to extending and retracting of the first hydraulic cylinder 31a.

One end portion of the second hydraulic cylinder 31b is coupled to the upper frame 1a, and the other end portion of the second hydraulic cylinder 31b is coupled to the second link 32b. The second link 32b swings around the axis P2 relative to the first link 32a in response to extending and contracting of the second hydraulic cylinder 31b.

As illustrated in Fig. 4, the traveling wheel 2a can pivot around an axis P3 extending in the up-down direction. The steering device 8 includes a slewing cylinder 8a provided over the second link 32b and the traveling wheel 2a. The traveling wheel 2a pivots around the axis P3 in response to extending and retracting of the slewing cylinder 8a. Each traveling wheel 2a is coupled to a hydraulic motor 2c configured to drive the traveling wheel 2a. More specifically, the hydraulic motor 2c is disposed adjacent to its corresponding traveling wheel 2a.

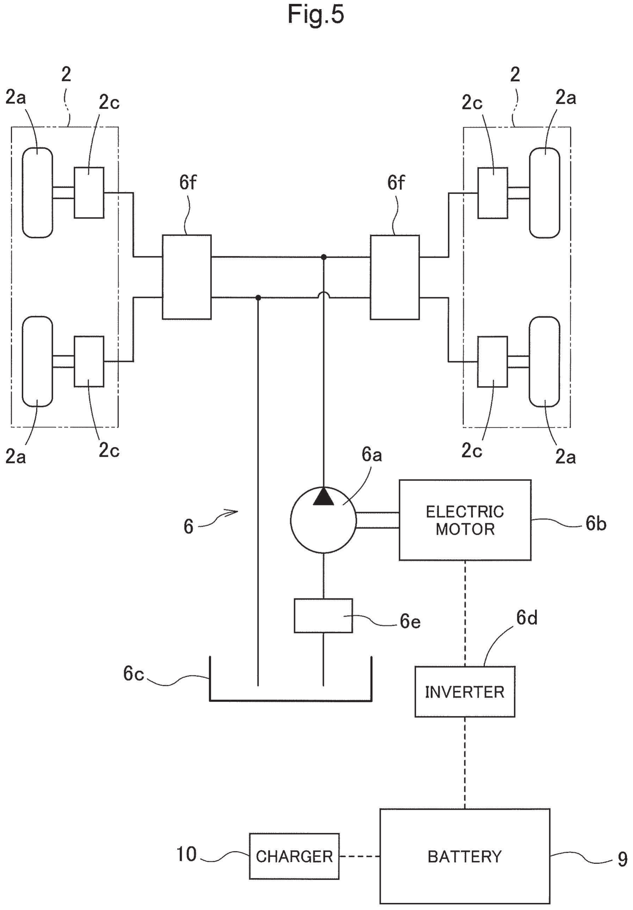

As illustrated in Fig. 5, the hydraulic pressure supply source 6 includes an oil cooler 6e, an inverter 6d, and a hydraulic pressure control valve 6f. Electric power supplied from the battery 9 is converted by the inverter 6d and supplied to the electric motor 6b. The hydraulic oil from the hydraulic oil tank 6c is supplied to a plurality of hydraulic motors 2c, a plurality of first hydraulic cylinders 31a, and a plurality of second hydraulic cylinders 31b by the hydraulic pump 6a. The hydraulic pressure control valve 6f adjusts the flow rate of hydraulic oil supplied from the hydraulic pump 6a. For example, the flow rate of the hydraulic oil supplied to the hydraulic motor 2c from the hydraulic pump 6a is adjusted by the hydraulic pressure control valve 6f, so that the rotation speed of the traveling wheel 2a is changed.

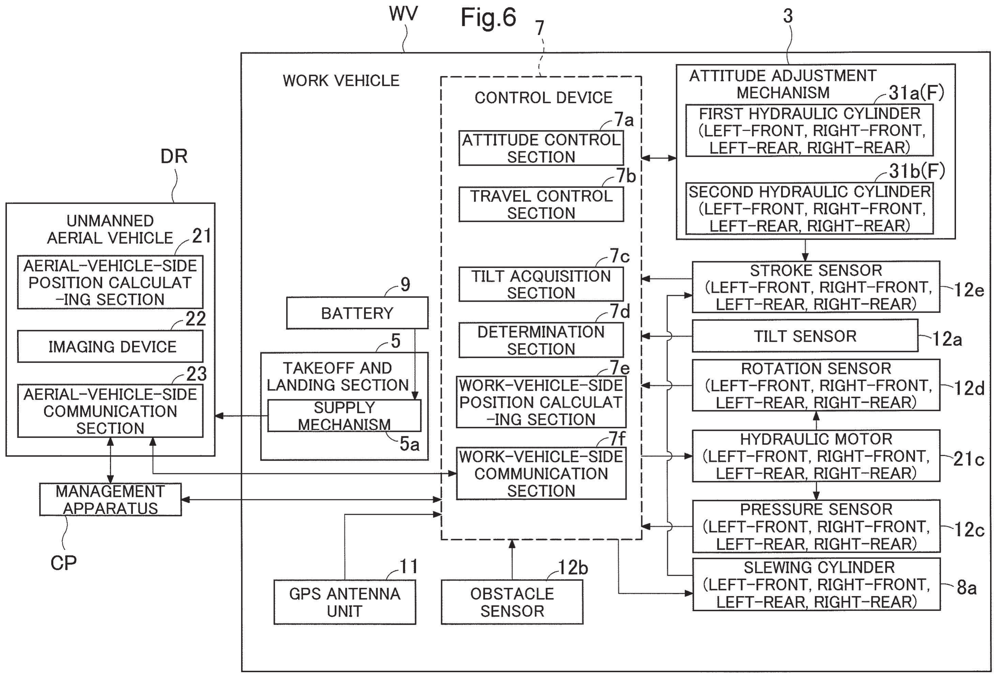

Fig. 6 is a block diagram illustrating a work vehicle system. The work vehicle system includes the work vehicle WV, the unmanned aerial vehicle DR, and a management apparatus CP. The management apparatus CP is provided outside the work vehicle WV and the unmanned aerial vehicle DR. The management apparatus CP can be a personal computer, a personal digital assistant, a remote controller, a management server, or the like. The management apparatus CP may be provided on the cloud. The management apparatus CP can remotely control the work vehicle WV and the unmanned aerial vehicle DR.

The control device 7 includes an attitude control section 7a configured to control the attitude of the body 101, a travel control section 7b configured to control the travel device 2, a tilt acquisition section 7c, a work-vehicle-side communication section 7f communicable with an aerial-vehicle-side communication section 23 of the unmanned aerial vehicle DR, a work-vehicle-side position calculating section 7e configured to calculate the position of the work vehicle WV, and a determination section 7d configured to determine whether or not the unmanned aerial vehicle DR can land on the takeoff and landing section 5. The control device 7 is an ECU (Electronic Control Unit). The control device 7 includes a nonvolatile memory in which programs are stored, and a CPU configured to execute the programs.

### [Tilt Acquisition Section]

The body 101 of the work vehicle WV includes a tilt sensor 12a. The tilt sensor 12a includes an inertial measurement unit. The tilt sensor 12a detects inertial information (yaw angle, pitch angle, roll angle, and the like) of the work vehicle WV. The tilt acquisition section 7c calculates the tilt of the body 101 of the work vehicle WV from the horizontal plane over time, based on an output signal from the tilt sensor 12a. The tilt acquisition section 7c generates topographic data of the ground on which the work vehicle WV travels, based on the inertial information.

The work vehicle WV includes a stroke sensor 12e configured to detect respective extension-retraction amounts of the first hydraulic cylinder 31a, the second hydraulic cylinder 31b, and the slewing cylinder 8a. The attitude control section 7a calculates the attitude of the body 101 of the work vehicle WV based on output signals from the stroke sensor 12e. The attitude control section 7a adjusts the flow rates of the hydraulic oil to the first hydraulic cylinder 31a and the second hydraulic cylinder 31b. Hereby, the swinging positions of the first link 32a and the second link 32b are changed by extending and retracting of the first hydraulic cylinder 31a and the second hydraulic cylinder 31b. The attitude adjustment mechanism 3 adjusts the attitude of the body 101 as described above.

The work vehicle WV includes a rotation sensor 12d configured to detect the rotation speed of the traveling wheel 2a, and a pressure sensor 12c configured to detect the pressure of the hydraulic oil supplied to the hydraulic motor 2c. The travel control section 7b controls the travel device 2 based on output signals from the rotation sensor 12d and the pressure sensor 12c, such that the rotation speed of the traveling wheel 2a reaches a target value. The travel control section 7b adjusts the flow rate of the hydraulic oil to the slewing cylinder 8a based on an output signal from the stroke sensor 12e. Hereby, the orientation of the traveling wheel 2a is changed by expanding and contracting of the slewing cylinder 8a. The steering device 8 steers the travel device 2 as described above.

The work vehicle WV includes an external sensor 12b (corresponding to a sensor of the present invention) configured to detect the surroundings of the body 101. In the present embodiment, the external sensor 12b is an ultrasonic sensor provided in the body 101. The control device 7 determines whether or not an obstacle is present around the body 101, based on an output signal from the external sensor 12b. However, the present invention is not limited to this, and the external sensor 12b may be implemented in other forms. For example, the external sensor 12b may be a three-dimensional measurement sensor.

The work-vehicle-side position calculating section 7e generates positioning data indicating the self-position of the work vehicle WV, based on positioning information on the work vehicle WV, input from the GPS antenna unit 11, and inertial information on the work vehicle WV, input from the tilt acquisition section 7c. The positioning data on the work vehicle WV is transmitted to the management apparatus CP and the aerial-vehicle-side communication section 23 by wired or wireless communication by the work-vehicle-side communication section 7f.

The unmanned aerial vehicle DR includes an aerial-vehicle-side position calculating section 21. The unmanned aerial vehicle DR receives positioning signals from an artificial satellite used for GNSS (global navigational satellite systems, e.g., GPS, QZSS, Galileo, GLONASS, BeiDou, and the like). The aerial-vehicle-side position calculating section 21 generates positioning data indicating the self-position of the unmanned aerial vehicle DR, based on an input positioning signal on the unmanned aerial vehicle DR and inertial information on the unmanned aerial vehicle DR. The positioning data on the unmanned aerial vehicle DR is transmitted to the management apparatus CP and the work-vehicle-side communication section 7f by wired or wireless communication by the aerial-vehicle-side communication section 23. Images captured by the imaging device 22 are transmitted to the management apparatus CP and the work-vehicle-side communication section 7f by wired or wireless communication by the aerial-vehicle-side communication section 23.

In mountainous areas with poor signal conditions, the GPS antenna unit 11 of the work vehicle WV may not be able to receive positioning signals. In this case, the work vehicle WV cannot calculate positioning data on the work vehicle WV, which may make it difficult for the work vehicle WV to autonomously travel. The work vehicle WV can calculate positional information on the work vehicle WV, based on information transmitted from the unmanned aerial vehicle DR. This allows the work vehicle WV to autonomously travel even in mountainous areas with poor signal conditions.

The unmanned aerial vehicle DR regularly takes off to above the work vehicle WV from a state where the unmanned aerial vehicle DR is on the takeoff and landing section 5. The unmanned aerial vehicle DR flies right above the work vehicle WV. The work-vehicle-side position calculating section 7e can calculate the self-position of the work vehicle WV based on survey data from the unmanned aerial vehicle DR and the inertial information on the work vehicle WV. Hereby, the work vehicle WV can autonomously travel even in mountainous areas with poor signal conditions.

The control device 7 generates a topographic map around the work vehicle WV, based on topographic data generated by the tilt acquisition section 7c and images captured by the unmanned aerial vehicle DR. However, the present invention is not limited to this, and the control device 7 may generate a topographic map around the work vehicle WV, based on topographic data generated by the tilt acquisition section 7c and output signals from the three-dimensional measurement sensor of the unmanned aerial vehicle DR.

### [Supply Mechanism]

The takeoff and landing section 5 includes a supply mechanism 5a capable of supplying electric power from the battery 9 of the work vehicle WV to a battery (not illustrated) of the unmanned aerial vehicle DR. The supply mechanism 5a is connected to the battery 9. In the present embodiment, the supply mechanism 5a supplies electric power from the battery 9 of the work vehicle WV to the unmanned aerial vehicle DR, by connection of an output terminal disposed on the top surface of the takeoff and landing section 5 to an input terminal of the unmanned aerial vehicle DR. However, the present invention is not limited to this, and the supply mechanism 5a may be disposed on the top surface of the takeoff and landing section 5 and supply electric power from the battery 9 of the work vehicle WV to the battery of the unmanned aerial vehicle DR by contactless power feeding.

The contactless power feeding may be power feeding by electromagnetic induction, for example.

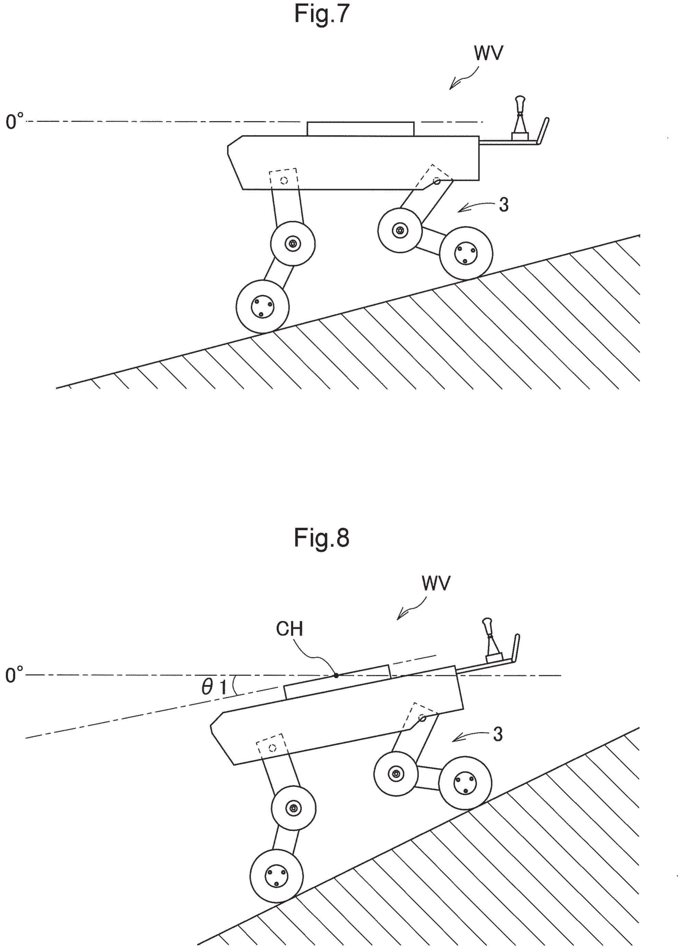

Fig. 7 is a view illustrating a landing-permitted state of the takeoff and landing section 5. The landing-permitted state is a state where the top surface of the takeoff and landing section 5 does not tilt at a predetermined angle or more. In other words, the tilt angle of the takeoff and landing section 5 from the horizontal plane is smaller than a threshold. The threshold is a tilt angle at which the unmanned aerial vehicle DR cannot land on the takeoff and landing section 5 safely. For example, the threshold is five degrees. In the present embodiment, the tilt angle of the top surface of the takeoff and landing section 5 is zero degrees from a horizontal plane extending along the top surface of the takeoff and landing section 5.

Fig. 8 is a view illustrating a landing-prohibited state of the takeoff and landing section 5. Point CH in FIG. 8 indicates the center of the takeoff and landing section 5 in the front-rear direction and in the right-left direction. The landing-prohibited state is a state where the top surface of the takeoff and landing section 5 is tilted at more than a predetermined angle. In other words, a tilt angle θ1 (tilt) of the takeoff and landing section 5 from the horizontal plane is equal to or more than the threshold. In the present embodiment, the tilt angle θ1 is a tilt angle of the top surface of the takeoff and landing section 5 from the horizontal plane passing through the point CH.

The determination section 7d determines whether or not the takeoff and landing section 5 is in the landing-permitted state. The tilt acquisition section 7c acquires the tilt angle θ1 of the takeoff and landing section 5 from the horizontal plane. As illustrated in Fig. 6, the determination section 7d determines whether the takeoff and landing section 5 is in the landing-permitted state or in the landing-prohibited state, based on the tilt angle θ1 acquired from the tilt acquisition section 7c. More specifically, in a case where the tilt angle θ1 is equal to or more than the threshold, the determination section 7d determines that the takeoff and landing section 5 is in the landing-prohibited state, and in a case where the tilt angle θ1 is smaller than the threshold, the determination section 7d determines that the takeoff and landing section 5 is in the landing-permitted state. The work-vehicle-side communication section 7f transmits information on whether the takeoff and landing section 5 is in the landing-permitted state or not, to the aerial-vehicle-side communication section 23.

### [Attitude Adjustment of Body by Attitude Adjustment Mechanism]

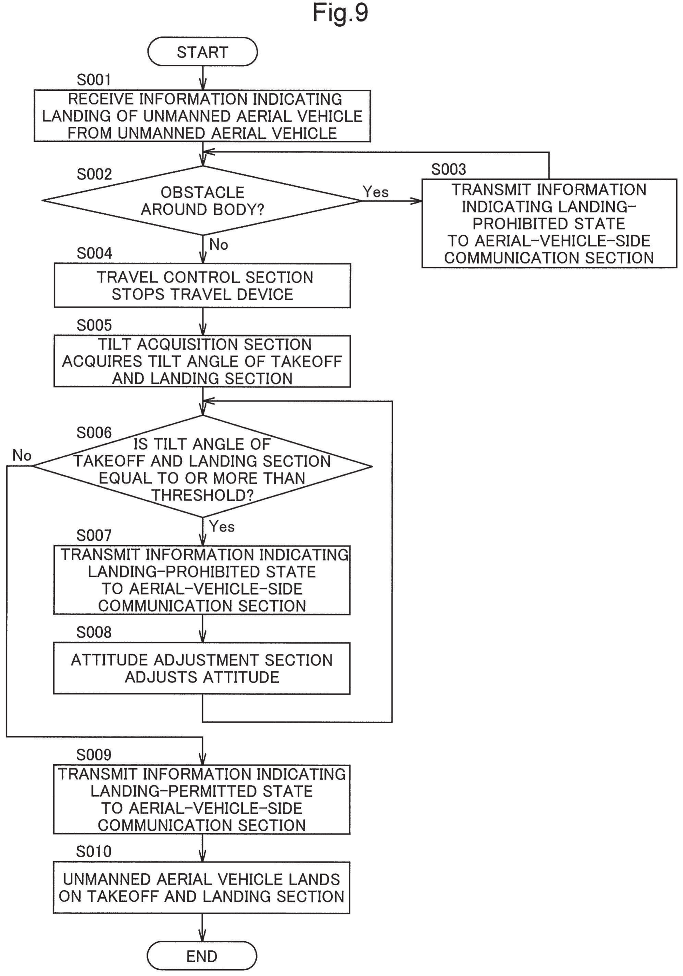

Next will be described the attitude adjustment of the body 101 by the attitude adjustment mechanism 3, based on the flowchart illustrated in Fig. 9. Note that the steps described below may be performed in different orders and some of the steps may be performed at the same time, as long as no inconsistency occurs.

The work vehicle WV travels on the ground and receives information indicating that the unmanned aerial vehicle DR is about to land, from the unmanned aerial vehicle DR (step S01). More specifically, before the unmanned aerial vehicle DR descends toward the takeoff and landing section 5, the aerial-vehicle-side communication section 23 transmits the information indicating that the unmanned aerial vehicle DR is about to land, to the work-vehicle-side communication section 7f. The work-vehicle-side communication section 7f transmits, to the control device 7, the received information indicating that the unmanned aerial vehicle DR is about to land.

In a case where the control device 7 determines, based on the output signal from the external sensor 12b, that an obstacle is present around the body 101 of the work vehicle WV (step S002; Yes), the work-vehicle-side communication section 7f transmits, to the aerial-vehicle-side communication section 23, information indicating that the takeoff and landing section 5 is in the landing-prohibited state (step S003), and the process proceeds to step S002.

In a case where the control device 7 determines that no obstacle is present around the body 101 of the work vehicle WV (step S002; No), the travel control section 7b stops the travel device 2 (step S004). In other words, the work vehicle WV stops the travel device 2 during landing of the unmanned aerial vehicle DR on the takeoff and landing section 5.

The tilt acquisition section 7c acquires the tilt angle θ1 of the takeoff and landing section 5 (step S005). In a case where the tilt angle θ1 of the takeoff and landing section 5, acquired by the tilt acquisition section 7c, is equal to or more than the threshold (step S006; Yes), the work-vehicle-side communication section 7f transmits, to the aerial-vehicle-side communication section 23, information indicating that the takeoff and landing section 5 is in the landing-prohibited state (step S007). In a case where the tilt angle θ1 of the takeoff and landing section 5, acquired by the tilt acquisition section 7c, is smaller than the threshold (step S006; No), the process proceeds to step S009.

Subsequently, the control device 7 causes the attitude adjustment mechanism 3 to adjust the attitude of the body 101 of the work vehicle WV to reduce the tilt angle θ1 below the threshold (step S008), and the process proceeds to step S006. In other words, the attitude adjustment mechanism 3 extends and retracts the extension-retraction mechanisms F to adjust the attitude of the body 101 of the work vehicle WV so that the tilt angle θ1 becomes smaller than the threshold. In the present embodiment, the attitude adjustment mechanism 3 adjusts the attitude of the body 101 so that the tilt angle θ1 becomes zero degrees. However, the present invention is not limited to this. If the tilt angle θ1 becomes smaller than the threshold, the attitude adjustment mechanism 3 does not need to adjust the attitude of the body 101 until the tilt angle θ1 reaches zero degrees.

As illustrated in Fig. 8, in a case where the takeoff and landing section 5 tilts downward toward the front side in the front-rear direction of the body, the right-front extension-retraction mechanism F and the left-front extension-retraction mechanism F are extended, so that the height, from the ground, of the front portion of the body which front portion is supported by the right-front extension-retraction mechanism F and the left-front extension-retraction mechanism F increases. Hereby, the takeoff and landing section 5 is controlled so that its top surface is maintained to be horizontal.

When the tilt angle θ1 of the takeoff and landing section 5, acquired by the tilt acquisition section 7c, is smaller than the threshold (step S006; No), the work-vehicle-side communication section 7f transmits, to the aerial-vehicle-side communication section 23, information indicating that the takeoff and landing section 5 is in the landing-permitted state (step S009). Upon receipt of the information indicating that the takeoff and landing section 5 is in the landing-permitted state from the work vehicle WV, the unmanned aerial vehicle DR lands on the takeoff and landing section 5 (S010). Thus, the attitude adjustment mechanism 3 adjusts the attitude of the body 101 so that the unmanned aerial vehicle DR can safely land on the takeoff and landing section 5.

### [Modifications of First Embodiment]

The present invention is not limited to the embodiment described above. For example, the following modifications may be employed. In the following modifications, components identical to those in the above embodiment are denoted by the same reference numerals.
[1] In the above embodiment, the unmanned aerial vehicle DR is a drone. However, the present invention is not limited to this, and the unmanned aerial vehicle DR may be a radio-controlled helicopter, for example.
[2] In the above embodiment, the takeoff and landing section 5 has a box-shape and is rectangular in a plan view. However, the present invention is not limited to this, and the takeoff and landing section 5 may be implemented in other forms. For example, the takeoff and landing section 5 may be provided with recesses into which legs of the unmanned aerial vehicle DR can be inserted. The takeoff and landing section 5 may have an outer peripheral portion formed in a bowl shape in a plan view. The takeoff and landing section 5 may not be in a rectangular shape in a plan view.
[3] In the above embodiment, the work vehicle WV stops the travel device 2 while the unmanned aerial vehicle DR is landing on the takeoff and landing section 5. However, the present invention is not limited to this. The work vehicle WV may travel slowly whiles the unmanned aerial vehicle DR is landing on the takeoff and landing section 5.
[4] In the above embodiment, the extension-retraction mechanism F includes the first hydraulic cylinder 31a and the second hydraulic cylinder 31b. However, the present invention is not limited to this. In the extension-retraction mechanism F, at least one of the first hydraulic cylinder 31a and the second hydraulic cylinder 31b may be an electrically-driven cylinder that electrically extends and retracts.
[5] The unmanned aerial vehicle DR may include a work device for spraying a chemical agent, and the takeoff and landing section 5 may include a tank in which the chemical agent is stored. The unmanned aerial vehicle DR may be configured to suck up the chemical agent stored in the tank by a tubular member.
[6] The management apparatus CP may be provided with the tilt acquisition section 7c and the determination section 7d. The management apparatus CP may be provided with the tilt acquisition section 7c and the determination section 7d.

### [Second Embodiment]

The following describes a work vehicle according to a second embodiment of the present invention with reference to the drawings. Components identical to those in the above embodiment are denoted by the same reference numerals, and a detailed description thereof may be omitted.

The work vehicle is capable of performing unmanned travel over the travel surface. In other words, the work vehicle can be remotely operated by a remote controller or can travel autonomously.

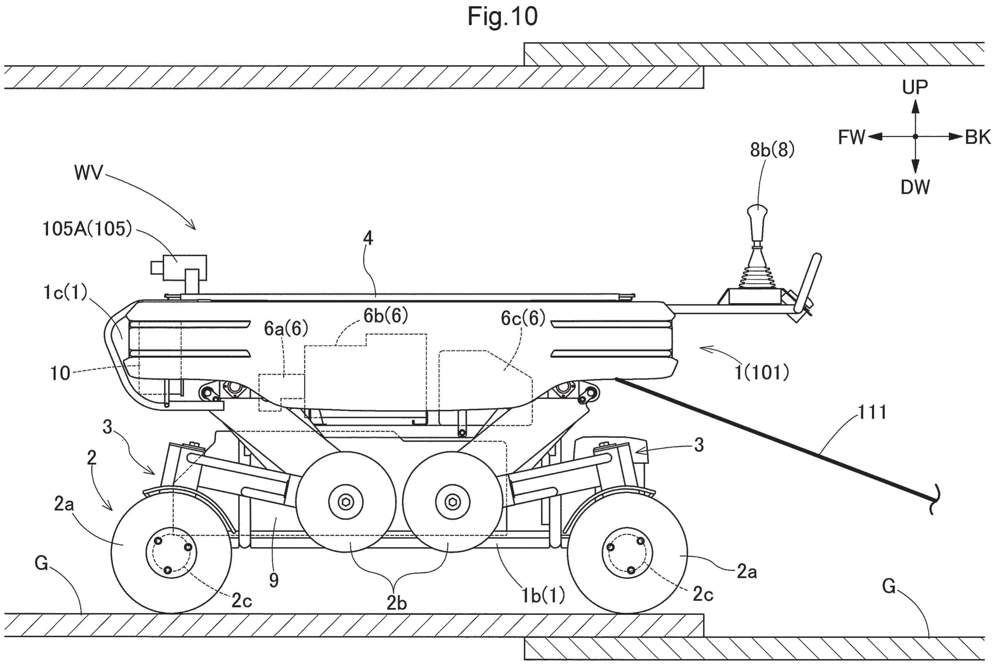

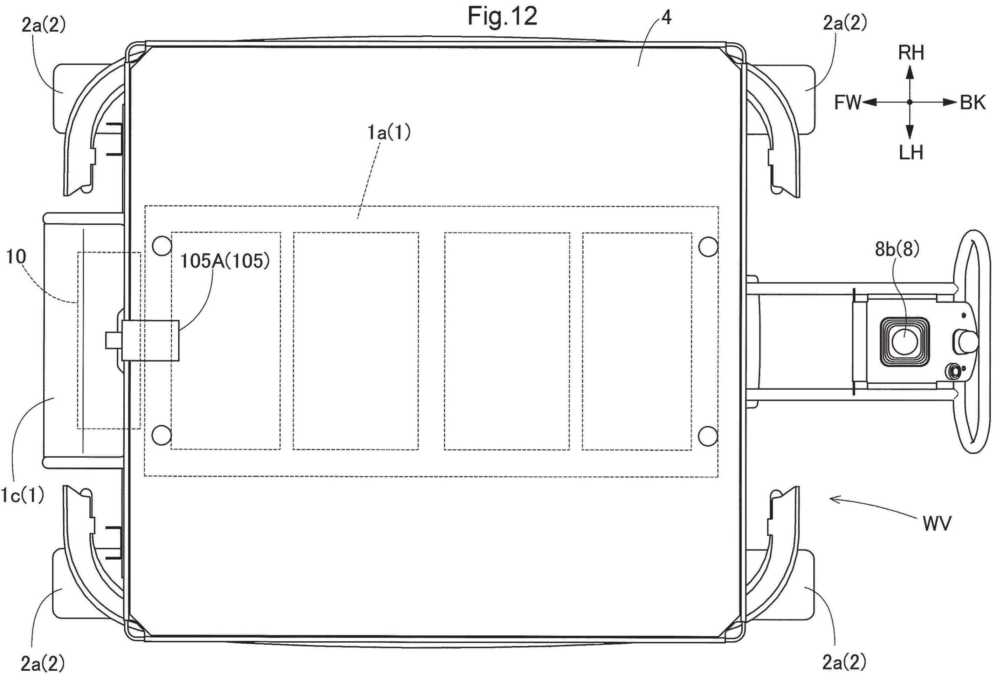

As illustrated in Figs. 10, 11, 12, the work vehicle WV includes the body 101, the travel device 2 supporting the body 101 and capable of traveling on the ground, a work device 105 fixed to the body 101, and the attitude adjustment mechanism 3 configured to adjust the attitude of the body 101. The body 101 has a rectangular shape in a plan view. In the present embodiment, the travel device 2 can travel on the inner surface of a cylindrical water pipe as a travel surface G.

The body 101 of the work vehicle WV includes the flat-shaped mounting table 4 on which an article can be loaded, the hydraulic pressure supply source 6 configured to drive the travel device 2, the control device 7 configured to control the work vehicle WV by a microcomputer, the steering device 8 including the operation handle 8b capable of steering the travel device 2, the battery 9 configured to supply electric power to the body 101, and the charger 10 connectable to an external power source and configured to charge the battery 9.

In the present embodiment, the work vehicle WV includes a cable 111 connected to the body 101. The cable 111 is connected to the management apparatus CP. The body 101 can perform wired communication with an external device outside the water pipe via the cable 111. However, the present invention is not limited to this. The cable 111 may be connected to the charger 10, and the body 101 may receive electric power from a power source outside the water pipe via the cable 111.

### [Work Device]

As illustrated in Figs. 10, 11, 12, the work device 105 is disposed in the front portion of the body 101. The work device 105 is a measurement device 105A configured to measure the travel surface G. In the present embodiment, the measurement device 105A is a camera. The measurement device 105A is disposed on the top surface of the body 101 and captures images in front of the body 101. The attitude of the measurement device 105A can be adjusted as the attitude adjustment mechanism 3 adjusts the attitude of the body 101. The work device 105 does not include a mechanism for adjusting its attitude. The work device 105 also does not include a mechanism for adjusting its height relative to the body 101.

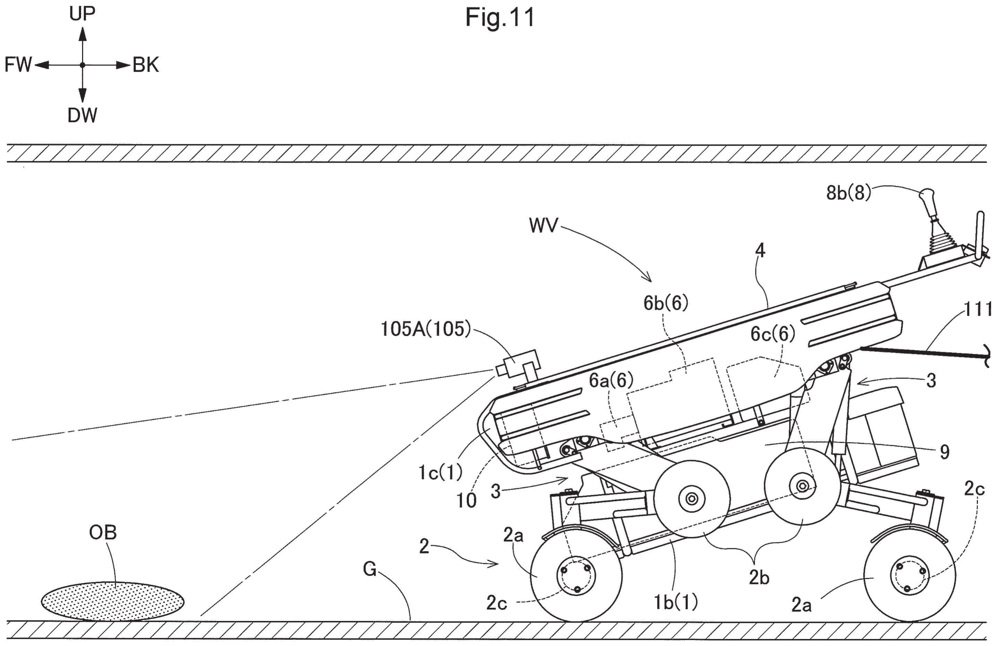

The attitude adjustment mechanism 3 can adjust the attitude of the body 101 between a traveling attitude, in which the body 101 travels on the travel surface G, as illustrated in Fig. 10, and an operational attitude, in which the work device 105 perform an operation as illustrated in Fig. 11, in response to extending and retracting of the extension-retraction mechanisms F. The attitude adjustment mechanism 3 can adjust the heights and the tilts of the body 101 and the work device 105 by extending and retracting the extension-retraction mechanisms F. The tilt of the body 101 from the horizontal plane in the traveling attitude is smaller than the tilt of the body 101 from the horizontal plane in the operational attitude. In the present embodiment, the tilt of the body 101 from the horizontal plane in the traveling attitude is zero degrees. The height of the body 101 in the traveling attitude is higher than the height of the body 101 in the operational attitude. However, the present invention is not limited to this, and the height of the body 101 in the traveling attitude may be lower than the height of the body 101 in the operational attitude.

As illustrated in Fig. 11, as the attitude adjustment mechanism 3 adjusts the body 101 to an attitude in which the body 101 tilts downward toward the front side, the body 101 enters the operational attitude, in which the work device 105 tilts downward toward the front side. More specifically, in the body 101 in the traveling attitude, the right-front and left-front extension-retraction mechanisms F are retracted. The right-rear and left-rear extension-retraction mechanisms F are extended. Hereby, the body 101 is adjusted to the operational attitude. Due to the attitude adjustment of the body 101 by the attitude adjustment mechanism 3 as described above, the measurement device 105A can measure a target object OB on the travel surface G.

As illustrated in Fig. 10, in the body 101 in the operational attitude, the attitude adjustment mechanism 3 adjusts the body 101 to be horizontal and increases the height of the body 101. More specifically, the right-front and left-front extension-retraction mechanisms F are extended. In the meantime, the right-rear and left-rear extension-retraction mechanisms F are retracted. Hereby, the body 101 is adjusted from the operational attitude to the traveling attitude. Due to the attitude adjustment of the body 101 by the attitude adjustment mechanism 3 as described above, the measurement device 105A is adjusted from the operational attitude, in which the measurement device 105A tilts downward toward the front side, to the traveling attitude, in which the measurement device 105A faces the horizontal direction.

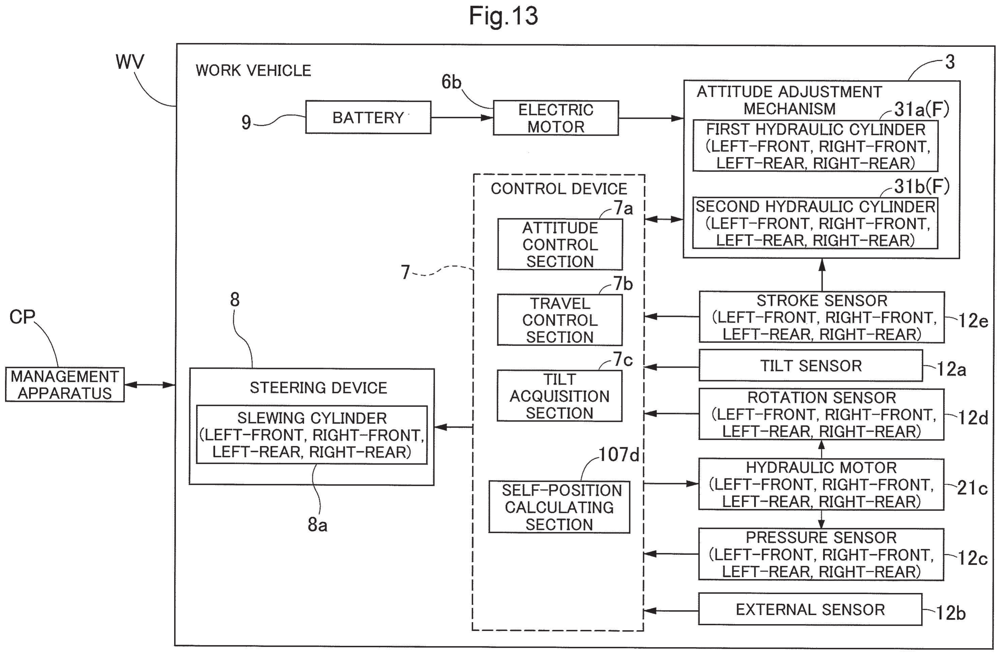

As illustrated in Fig. 13, the control device 7 includes the attitude control section 7a configured to control the attitude of the body 101, the travel control section 7b configured to control the travel device 2, the tilt acquisition section 7c configured to acquire the tilt angle of the body 101 from the horizontal plane, and a self-position calculating section 107e configured to calculate the position of the work vehicle WV. The control device 7 is an ECU (Electronic Control Unit). The control device 7 includes a nonvolatile memory in which programs are stored, and a CPU configured to execute the programs.

The attitude control section 7a calculates the attitude of the body 101 based on an output signal from the stroke sensor 12e. The attitude control section 7a adjusts the flow rates of the hydraulic oil to the first hydraulic cylinder 31a and the second hydraulic cylinder 31b. Hereby, the swinging positions of the first link 32a and the second link 32b are changed in response to extending and retracting of the first hydraulic cylinder 31a and the second hydraulic cylinder 31b. The attitude adjustment mechanism 3 adjusts the attitude of the body 101 as described above. For example, based on a detection result from the tilt acquisition section 7c, the attitude adjustment mechanism 3 adjusts the attitude of the body 101 such that the top surface of the body 101 is horizontal in the traveling attitude, and the attitude adjustment mechanism 3 adjusts the attitude of the body 101 such that the top surface of the body 101 tilts from the horizontal plane in the operational attitude.

The self-position calculating section 107d generates positioning data indicating the self-position of the work vehicle WV, based on a map stored in advance, information on the surroundings of the body 101, input from the external sensor 12b, the rotation speeds of the traveling wheels 2a, input from the rotation sensor 12d, the extension-retraction amounts of the slewing cylinders 8a, input from the stroke sensor 12e, and inertial information on the work vehicle WV, input from the tilt acquisition section 7c. The positioning data on the work vehicle WV is transmitted to the management apparatus CP connected to the body 101 via the cable 111 by wired communication. The management apparatus CP is provided outside the work vehicle WV. The management apparatus CP can be a personal computer, a personal digital assistant, a remote controller, a management server, or the like. The management apparatus CP may be provided on the cloud. The management apparatus CP can remotely control the work vehicle WV.

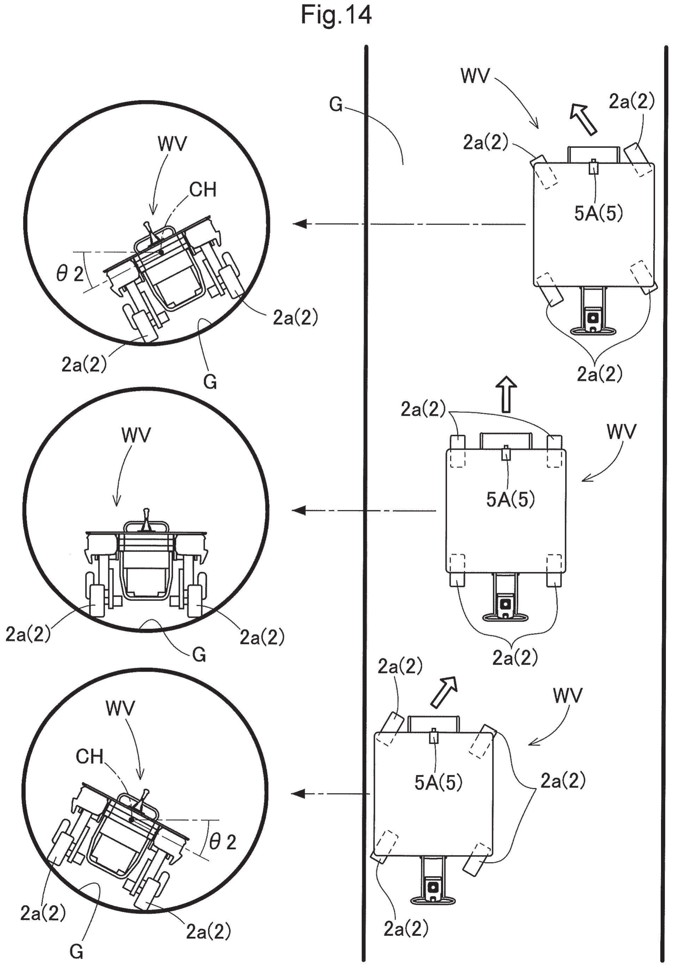

Fig. 14 is a view illustrating steering of the travel device 2 by the steering device 8. In Fig. 14, point CH indicates the center of the body 101 in the right-left direction and the center of the upper frame 1a in the up-down direction. The slewing cylinders 8a individually change respective swirl directions of four traveling wheels 2a. In a case where a tilt θ2 of the body 101 from the horizontal plane in the right-left direction of the body is equal to or more than a threshold, the steering device 8 steers the travel device 2 in a direction of a traveling wheel 2a that is positioned lower out of the right and left traveling wheels 2a. In the present embodiment, the tilt θ2 is a tilt angle of the body 101 from the horizontal plane passing through the point CH. For example, the threshold is eight degrees.

### [Steering of Travel Device by Steering Device]

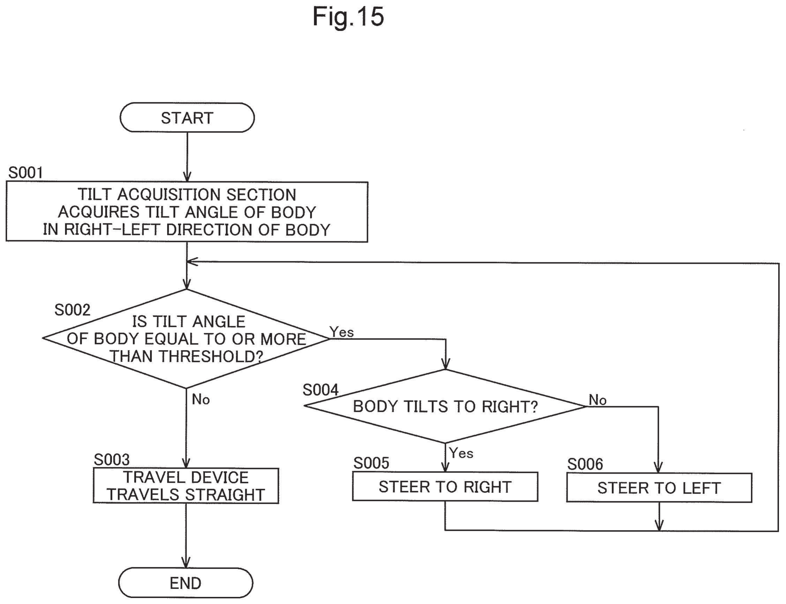

Next will be described steering of the travel device 2 by the steering device 8, based on the flowchart illustrated in Fig. 15. Note that the steps described below may be performed in different orders and some of the steps may be performed at the same time, as long as no inconsistency occurs.

The work vehicle WV is traveling on the travel surface G, and the tilt acquisition section 7c acquires the tilt θ2 of the body 101 in the right-left direction (step S001). In a case where the tilt θ2 of the body 101, acquired by the tilt acquisition section 7c, is smaller than the threshold (step S002; No), the steering device 8 causes the travel device 2 to travel straight as illustrated in Fig. 14 (step S003).

In a case where the tilt θ2 is equal to or more than the threshold (step S002: Yes), and in a case where the control device 7 determines that the body 101 tilts to the right, based on the inertial information on the work vehicle WV, input from the tilt acquisition section 7c (step S004: Yes), the steering device 8 steers the travel device 2 to the right as illustrated in Fig. 14 (step S005), and then, the process proceeds to step S002.

In a case where the tilt θ2 is equal to or more than the threshold (step S002: Yes), and in a case where the control device 7 determines that the body 101 does not tilt to the right (step S004; No), the steering device 8 steers the travel device 2 to the left as illustrated in Fig. 14 (step S006), and then, the process proceeds to step S002.

Particularly, in a case where the travel device 2 travels on the inner surface of the cylindrical water pipe, the body 101 tends to tilt in the right-left direction. Due to the steering of the travel device 2 by the steering device 8 as described above, the work vehicle WV can autonomously travel without the body 101 tipping over.

### [Modifications of Second Embodiment]

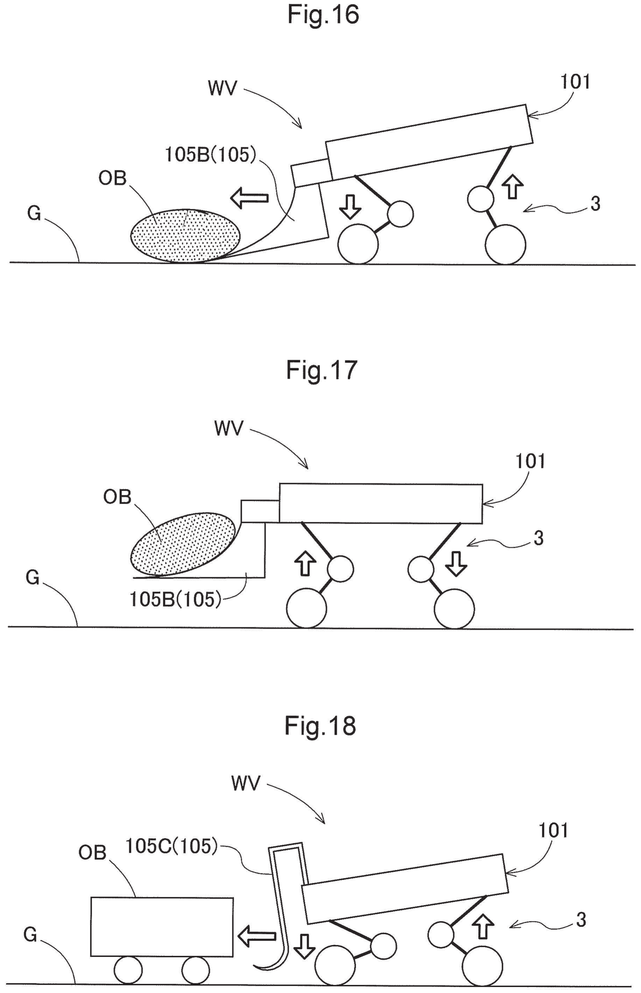

The present invention is not limited to the embodiment described above. For example, the following modifications may be employed. In the following modifications, components identical to those in the above embodiment are denoted by the same reference numerals.
[1] In the above embodiment, the work device 105 is the measurement device 105A configured to measure the travel surface G. However, the present invention is not limited to this. As illustrated in Figs. 16, 17, the work device 105 may be a bucket 105B configured to scoop up the target object OB on the travel surface G. As the attitude adjustment mechanism 3 adjusts the attitude of the body 101, the bucket 105B can scoop up the target object OB on the travel surface G.

As illustrated in Fig. 16, as the attitude adjustment mechanism 3 adjusts the body 101 to an attitude in which the body 101 tilts downward toward the front side, the body 101 enters the operational attitude, in which the bucket 105B tilts downward toward the front side. More specifically, the right-front and left-front extension-retraction mechanisms F are retracted. In the meantime, the right-rear and left-rear extension-retraction mechanisms F are extended. In such an operational attitude, the bucket 105B holds the target object OB on the travel surface G.

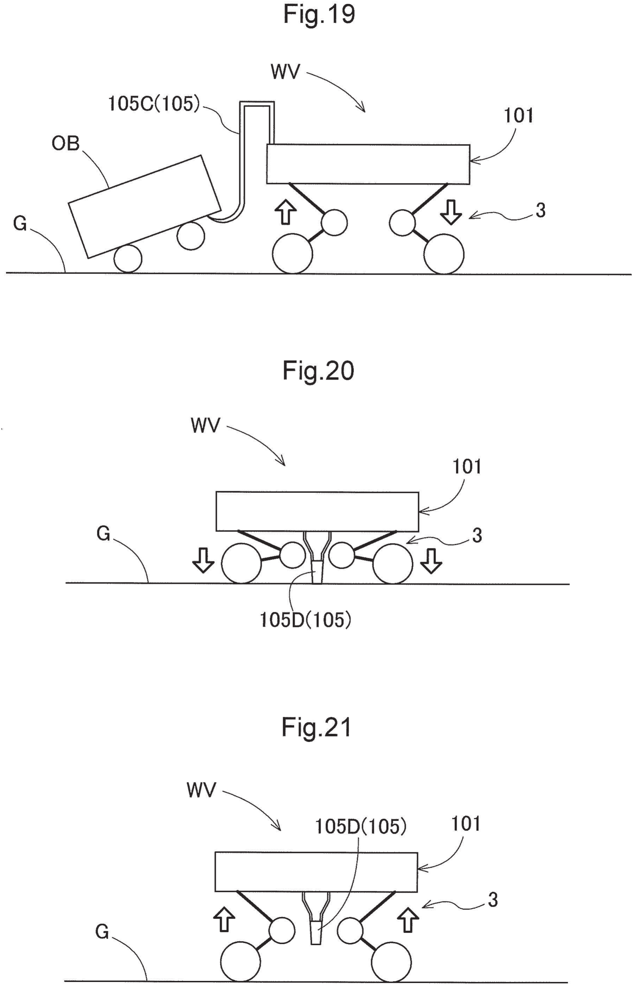

Then, as illustrated in Fig. 17, the attitude adjustment mechanism 3 adjusts the body 101 to be horizontal and increases the height of the body 101. More specifically, the right-front and left-front extension-retraction mechanisms F are extended. In the meantime, the right-rear and left-rear extension-retraction mechanisms F are retracted. Due to the attitude adjustment of the body 101 by the attitude adjustment mechanism 3 as described above, the bucket 105B is adjusted from the operational attitude, in which the bucket 105B tilts downward toward the front side, to the traveling attitude, in which the target object OB can be transported.
[2] As illustrated in Figs. 18, 19, the work device 105 may be a crane 105C configured to lift and hold the target object OB on the travel surface G. Due to the attitude adjustment of the body 101 by the attitude adjustment mechanism 3, the crane 105C can lift and hold the target object OB on the travel surface G.
[3] In the above embodiment, the work device 105 is the measurement device 105A, more specifically, a camera. However, the present invention is not limited to this. As illustrated in Figs. 20, 21, the work device 105 may be a pH measurement device 105D configured to measure the pH of soil or liquid. The pH measurement device 105D is fixed to the lower frame 1b. The work device 105 may be a sampling device (for example, a drill) configured to collect soil or the like below the body 101.

As illustrated in Figs. 20, 21, as the attitude adjustment mechanism 3 lowers the height of the body 101 with the body 101 maintained to be horizontal, the work device 105 comes into contact with the travel surface G. More specifically, the right-front, left-front, right-rear, and left-rear extension-retraction mechanisms F are retracted. Hereby, the body 101 and the pH measurement device 105D are adjusted from the traveling attitude to the operational attitude.
[4] In the above embodiment, the mounting table 4 is flat. However, the present invention is not limited to this, and the mounting table 4 may be implemented in other forms. For example, the mounting table 4 may include a plurality of rollers that are rollable. The plurality of rollers is arranged in the short direction of the rollers. Due to the attitude adjustment of the body 101 by the attitude adjustment mechanism 3, an article placed on the plurality of rollers is transported to outside the body 101. More specifically, as the body 101 tilts, the top surface of the mounting table 4 tilts, so that the plurality of rollers rolls to transport the article along the top surface of the mounting table 4.
[5] In the above embodiment, the extension-retraction mechanism F includes the first hydraulic cylinder 31a and the second hydraulic cylinder 31b. However, the present invention is not limited to this. In the extension-retraction mechanism F, at least one of the first hydraulic cylinder 31a and the second hydraulic cylinder 31b may be an electrically-driven cylinder that electrically extends and retracts.
[6] In the present embodiment, the tilt of the body 101 from the horizontal plane in the traveling attitude is zero degrees. However, the present invention is not limited to this. The tilt of the body 101 from the horizontal plane in the traveling attitude may not be zero degrees, provided that the tilt of the body 101 in the traveling attitude is smaller than the tilt of the body 101 from the horizontal plane in the operational attitude.
[7] The management apparatus CP may be provided with the tilt acquisition section 7c and the self-position calculating section 107d.
[8] The work vehicle WV may include a plurality of work devices 105. In addition to one or more work devices 105, the work vehicle WV may include a work device that can adjust the attitude and height.
[9] In the above embodiment, the work device 105 is disposed in the front portion or lower portion of the body 101. However, the present invention is not limited to this, and the work device 105 can be attached at any position. For example, the work device 105 may be disposed in a rear portion of the body 101. Alternatively, the work device 105 may be disposed in a lateral portion of the body 101.

### Industrial Applicability

The present invention is applicable to a work vehicle that can travel on bumpy ground or sloping ground and is also applicable to a work vehicle on which an operator can ride.

### Description of Reference Numerals

2: travel device
2a: traveling wheel
3: attitude adjustment mechanism
31a: first hydraulic cylinder (extension-retraction mechanism)
31b: second hydraulic cylinder (extension-retraction mechanism)
32a: first link (extension-retraction mechanism)
32b: second link (extension-retraction mechanism)
4: mounting table
5: takeoff and landing section
5a: supply mechanism
5b: marker
7c: tilt acquisition section
7d: determination section
7f: work-vehicle-side communication section
8: steering device
9: battery
23: aerial-vehicle-side communication section
101: body
105: work device
105A: measurement device
105B: bucket
105C: crane
DR: unmanned aerial vehicle
WV: work vehicle
θ1: tilt angle
θ2: tilt
G: travel surface
OB: target object
WV: work vehicle

## Claims

1. A work vehicle, comprising:
a body including
a takeoff and landing section on which an unmanned aerial vehicle is capable of taking off and landing,
a travel device supporting the takeoff and landing section and capable of traveling on ground, and
a tilt acquisition section configured to acquire a tilt angle of the takeoff and landing section from a horizontal plane; and
an attitude adjustment mechanism configured to adjust an attitude of the body in accordance with the tilt angle acquired by the tilt acquisition section, in such a manner that, in a case where the tilt angle is equal to or more than a threshold, the attitude adjustment mechanism adjusts the attitude of the body to reduce the tilt angle below the threshold.

2. The work vehicle according to claim 1, wherein
the attitude adjustment mechanism includes extension-retraction mechanisms supported by respective traveling wheels in such a manner as to be extendable and retractable, and
in a case where the tilt angle is equal to or more than the threshold at a time when the unmanned aerial vehicle lands on the takeoff and landing section, the attitude adjustment mechanism extends and retracts the extension-retraction mechanisms to adjust the attitude of the body to reduce the tilt angle below the threshold.

3. The work vehicle according to claim 1 or 2, wherein
the attitude adjustment mechanism adjusts the attitude of the body such that the tilt angle reaches zero degrees at a time when the unmanned aerial vehicle lands on the takeoff and landing section.

4. The work vehicle according to any one of claims 1 to 3, further comprising:
a work-vehicle-side communication section communicable with an aerial-vehicle-side communication section of the unmanned aerial vehicle; and
a determination section configured to determine whether or not landing of the unmanned aerial vehicle on the takeoff and landing section is permissible, in such a manner that, in a case where the tilt angle is equal to or more than the threshold, the determination section determines that the takeoff and landing section is in a landing-prohibited state, and in a case where the tilt angle is smaller than the threshold, the determination section determines that the takeoff and landing section is in a landing-permitted state, wherein
the work-vehicle-side communication section transmits information on whether the takeoff and landing section is in the landing-permitted state or not, to the aerial-vehicle-side communication section.

5. The work vehicle according to claim 4, wherein
the body further includes a sensor configured to detect surroundings of the body, and
in a case where it is determined that an obstacle is present around the body, based on an output signal from the sensor, the work-vehicle-side communication section transmits information indicating that the takeoff and landing section is in the landing-prohibited state, to the aerial-vehicle-side communication section.

6. The work vehicle according to any one of claims 1 to 5, wherein
the takeoff and landing section includes a marker indicating a position of the takeoff and landing section to the unmanned aerial vehicle.

7. The work vehicle according to any one of claims 1 to 6, wherein
the body further includes a battery configured to supply electric power to the body, and
the takeoff and landing section includes a supply mechanism capable of supplying the electric power from the battery to the unmanned aerial vehicle.

8. The work vehicle according to any one of claims 1 to 7, wherein
the travel device is stopped during landing of the unmanned aerial vehicle on the takeoff and landing section.

9. A work vehicle system, comprising:
an unmanned aerial vehicle; and
a work vehicle including
a takeoff and landing section on which the unmanned aerial vehicle is capable of taking off and landing,
a travel device supporting the takeoff and landing section and capable of traveling on ground,
a tilt acquisition section configured to acquire a tilt angle of the takeoff and landing section from a horizontal plane, and
an attitude adjustment mechanism configured to adjust an attitude of the work vehicle in accordance with the tilt angle acquired by the tilt acquisition section, in such a manner that, in a case where the tilt angle is equal to or more than a threshold, the attitude adjustment mechanism adjusts the attitude of the work vehicle to reduce the tilt angle below the threshold.

10. A work vehicle capable of performing unmanned travel over a travel surface, the work vehicle comprising:
a body;
a travel device supporting the body and capable of traveling on the travel surface;
a work device fixed to the body; and
an attitude adjustment mechanism configured to adjust an attitude of the body,
the work device being adjustable in attitude as the attitude adjustment mechanism adjusts the attitude of the body.

11. The work vehicle according to claim 10, wherein
the travel device includes traveling wheels,
the attitude adjustment mechanism includes extension-retraction mechanisms supported by the traveling wheels, respectively, in such a manner as to be extendable and retractable, and
the attitude adjustment mechanism is capable of adjusting the attitude of the body between a traveling attitude enabling the work vehicle to travel on the travel surface and an operational attitude enabling the work device to perform an operation, by extending and retracing the extension-retraction mechanisms.

12. The work vehicle according to claim 11, wherein
the attitude adjustment mechanism is capable of adjusting heights of the body and the work device by extending and retracting the extension-retraction mechanisms.

13. The work vehicle according to claim 11 or 12, wherein
the body includes a tilt acquisition section configured to acquire a tilt angle of the body from a horizontal plane,
while the work vehicle is in the traveling attitude, the attitude adjustment mechanism adjusts the attitude of the body, based on a detection result from the tilt acquisition section, such that a top surface of the body is horizontal, and
while the work vehicle is in the operational attitude, the attitude adjustment mechanism adjusts the attitude of the body, based on a detection result from the tilt acquisition section, such that the top surface of the body tilts from the horizontal plane.

14. The work vehicle according to any one of claims 10 to 13, wherein
the work device is a measurement device configured to measure the travel surface, and
the measurement device is capable of measuring the travel surface as the attitude adjustment mechanism adjusts the attitude of the body.

15. The work vehicle according to any one of claims 10 to 14, further comprising:
a steering device capable of steering the travel device, wherein
the travel device includes right and left traveling wheels and is capable of traveling on an inner surface of a water pipe, as the travel surface, and
in a case where the body tilts from a horizontal plane in a right-left direction of the body at an angle equal to or more than a threshold, the steering device steers the travel device in a direction of a traveling wheel that is positioned lower out of the right and left traveling wheels.

16. The work vehicle according to any one of claims 10 to 15, wherein
the work device is a bucket configured to scoop up a target object on the travel surface, and
the bucket is capable of scooping up the target object on the travel surface as the attitude adjustment mechanism adjusts the attitude of the body.

17. The work vehicle according to any one of claims 10 to 15, wherein
the work device is a crane configured to lift and hold a target object on the travel surface, and
the crane is capable of lifting and holding the target object as the attitude adjustment mechanism adjusts the attitude of the body.

18. The work vehicle according to any one of claims 10 to 17, wherein
the body includes a mounting table on which an article is placeable, and
the article placed on the mounting table is transported to outside the body as the attitude adjustment mechanism adjusts the attitude of the body.
